# EUROPEAN PATENT SPECIFICATION

(11) **EP 3 691 248 B1**
(45) Date of publication and mention of the grant of the patent: **16.11.2022**
(21) Application number: 18863268.1
(22) Date of filing: 23.05.2018
(51) Int. Cl.: H04N 5/232, H04N 7/18, G08B 13/196, G08B 25/04, G08B 3/10, G08B 25/01

(54) **TERMINAL DEVICE AND CONTROL METHOD**
TERMINALVORRICHTUNG UND KONTROLLVERFAHREN
DISPOSITIF TERMINAL ET PROCÉDÉ DE COMMANDE

(30) Priority: 26.09.2017 JP 2017185011
(43) Date of publication of application: 05.08.2020
(73) Proprietor: JVCKENWOOD Corporation, Yokohama-shi, Kanagawa 221-0022 (JP)
(72) Inventor: NISHIOKA, Masamichi, Yokohama-shi, Kanagawa 221-0022 (JP)
(74) Representative: Wimmer, Hubert
(86) International application number: PCT/JP2018/019863
(87) International publication number: WO 2019/064687

(56) References cited:
- EP-A2- 2 983 357
- JP-A- 2004 328 333
- JP-A- 2014 102 828
- JP-A- 2017 168 914
- US-A1- 2016 182 850

## Description

### [TECHNICAL FIELD]

The present invention relates to a terminal device and a control method for controlling a terminal device and wearable camera.

### [BACKGROUND ART]

JP2007-329757 A shows a technology in which current positional information and an emergency signal are transmitted from a mobile communication device to a server, the server activates a fixed monitoring camera provided at a position closest to the mobile communication device transmitting the emergency signal, and the monitoring camera thus activated captures images around the mobile communication device transmitting the emergency signal.

Attention is also drawn to EP 2 983 357 A2 related to a recording system for an emergency response unit, which includes a first data collection device configured to record a first video, audio or data segment with an incident identifier and transmit a message including the incident identifier. A second data collection device may receive the message when it is within a communications range and initiate (if it is not already active) recording at least a second video, audio or data segment with the incident identifier, allowing the first segment and the second segment to be associated using the incident identifier.

### [SUMMARY OF INVENTION]

A plurality of policemen may carry cameras respectively, and the cameras may capture images for the record. In this case, it is desired to cause a suitable one of the plurality of cameras to start video recording autonomously in an emergency.

The embodiments address this issue, and a purpose thereof is to provide a terminal device and a control method capable of causing a camera to start video recording properly in an emergency.

In accordance with the present invention, a terminal device and a control method in a terminal device as set forth in claims 1 and 6 are provided. Further embodiments are inter alia disclosed in the dependent claims.

The terminal device inter alia includes: a reception unit that receives an emergency signal from a further terminal device; a computing unit that computes a distance between the terminal device and the further terminal device; and a comparison unit that causes a camera connected to the terminal device to start video recording when the reception unit receives the emergency signal and the distance computed by the computing unit is equal to or smaller than a predetermined video recording start threshold value.

The method is a control method in a terminal device and inter alia includes: receiving an emergency signal from a further terminal device; computing a distance between the terminal device and the further terminal device; and causing a camera connected to the terminal device to start video recording when the emergency signal is received and the distance thus computed is equal to or smaller than a predetermined video recording start threshold value.

According to the embodiment, it is possible to cause the camera to start video recording properly in an emergency.

### [BRIEF DESCRIPTION OF THE DRAWINGS]

Fig. 1 shows a configuration of a communication system according to the first embodiment;
Fig. 2A is a front view of the terminal device of Fig. 1, and Fig. 2B is a side view of the terminal device of Fig. 1;
Fig. 3 is a front view of the camera of Fig. 1;
Fig. 4 is a block diagram showing a configuration of the camera system of Fig. 1;
Fig. 5 is a flowchart showing the process of transmitting an emergency signal in the terminal device of Fig. 1; and
Fig. 6 is a flowchart showing the process of receiving an emergency signal in the terminal device of Fig. 1.

### [DESCRIPTION OF EMBODIMENTS]

### (First embodiment)

A brief summary will be given before describing the embodiments in specific details. The first embodiment relates to a communication system including a plurality of terminal devices and a plurality of cameras. A pair of a terminal device and a camera are connected to each other wirelessly or by wire and are paired. The terminal device and the camera that are paired are mainly carried by a user like a policeman and a security personnel. The camera is called a wearable camera and is worn by the user. The camera is controlled by the terminal device with which the camera is paired to start or stop video recording.

The communication system is compatible with, for example, a business wireless system, and the plurality of terminal devices directly communicate with each other without being mediated by a base station device. One-to-one mode of communication or one-to-many mode of communication may be used. The latter represents group communication. The business wireless system includes an emergency messaging function. The function allows a terminal device to deliver an emergency message to a further terminal device when a contact is needed urgently. When a button for emergency messaging is pressed down by a user, the terminal device transmits an emergency signal and causes the camera paired with the terminal device to start video recording. When the button is pressed down again while the emergency signal is being transmitted, the terminal device ends the transmission of the emergency signal and causes the camera to end video recording. Instead of pressing down an emergency button, a sensor built in the terminal device may sense that the use falls, an emergency signal may be transmitted, and the camera paired with the terminal device may be caused to start video recording. The user presses down the emergency button to, for example, chase a chased person. The recorded video can be used as an evidence or the like. When an emergency signal is received, the terminal devices in the group notify the user of the occurrence of an emergency situation by sound or display. The user notified of the occurrence of an emergency situation can go and help the user originating the emergency message.

The camera paired with the terminal device receiving the emergency signal may also be caused to start video recording. However, the user at a position relatively remote from the user originating the emergency message may not have the chased person caught within the imaging range of the camera or may not be able to go and help because the user is doing a different activity based on a different instruction. For this reason, it is not desirable to cause the camera of such a user to record a video. In other words, it is desired, as described above, to cause a suitable one of the plurality of cameras to start video recording autonomously. Thus, the terminal device according to the embodiment causes the camera carried by the user along with the terminal device to start video recording when an emergency signal is received from a further terminal device and when the distance between the terminal device and the further terminal device is equal or small than a predetermined video recording start threshold value.

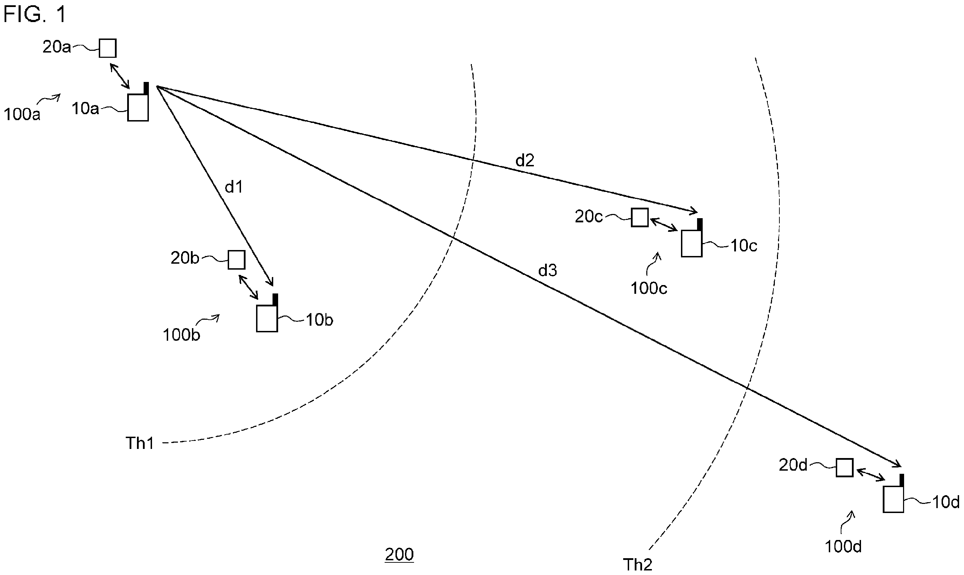

Fig. 1 shows a configuration of a communication system 200 according to the first embodiment. The communication system 200 includes a first camera system 100a, a second camera system 100b, a third camera system 100c, and a fourth camera system 100d, which are generically referred to as camera systems 100. The first camera system 100a includes a first terminal device 10a and a first camera 20a. The second camera system 100b includes a second terminal device 10b and a second camera 20b. The third camera system 100c includes a third terminal device 10c and a third camera 20c. The fourth camera system 100d includes a fourth terminal device 10d and a fourth camera 20d. The first terminal device 10a, the second terminal device 10b, the third terminal device 10c, and the fourth terminal device 10d are generically referred to as terminal devices 10. The first camera 20a, the second camera 20b, the third camera 20c, and the fourth camera 20d are generically referred to as cameras 20. The number of camera systems 100 is not limited to "4".

The first terminal device 10a and the first camera 20a are paired and are carried by the first user. The second terminal device 10b and the second camera 20b are paired and are carried by the second user. The third terminal device 10c and the third camera 20c are paired and are carried by the third user. The fourth terminal device 10d and the fourth camera 20d are paired and are carried by the fourth user. Thus, the terminal device 10 and the camera 20 carried by the same user are paired and are wirelessly connected. The terminal device 10 and the camera 20 that are paired may be connected by wire.

The terminal device 10 is a wireless terminal capable of communicating with the other terminal devices 10 using a business wireless system. The communication may be a call or data communication. A publicly known technology may be used for the business wireless system, and a detailed description thereof is omitted. The four terminal devices 10 form a group. One of the terminal devices 10 included in the group initiates communication with the other terminal devices 10 included in the group.

The camera 20 can record a video. The camera 20 is controlled by the user or by the terminal device 10 paired with the camera 20 to start and stop video recording.

Fig. 1 also shows the relative positions of the plurality of terminal devices 10. The direct distance between the first terminal device 10a and the second terminal device 10b is defined as a distance d1. The direct distance between the first terminal device 10a and the third terminal device 10c is defined as a distance d2. The direct distance between the first terminal device 10a and the fourth terminal device 10d is defined as a distance d3. The distance d1 is smaller than the distance d2. The distance d2 is smaller than the distance d3.

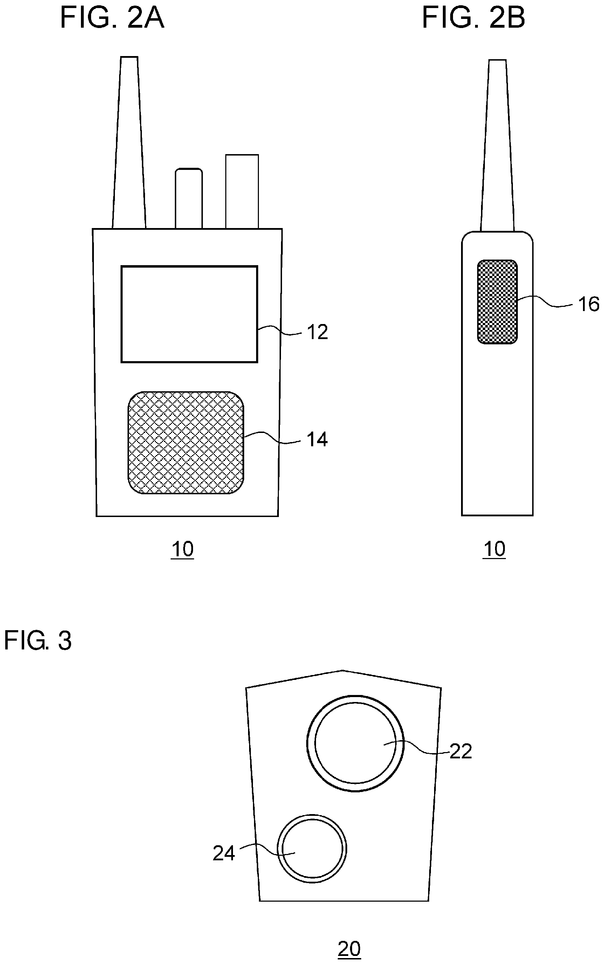

Fig. 2A is a front view of the terminal device 10 of Fig. 1, and Fig. 2B is a side view of the terminal device 10 of Fig. 1. The terminal device 10 includes a display unit 12 and a speaker 14 on the front thereof and includes an emergency button 16 for emergency messaging on the side surface thereof. The display unit 12 displays various information. The speaker 14 outputs voice or alert sound. The emergency button 16 is pressed down by the user when an emergency situation arises and is pressed down again when the emergency situation ends. Instead of pressing down the emergency button 16, a sensor built in the terminal device 10 may sense that the use falls, an emergency signal may be transmitted, and the camera 20 paired with the terminal device may be caused to start video recording. The appearance of the terminal device 10 is not limited to the example of Fig. 2.

Fig. 3 is a front view of the camera 20 of Fig. 1. The camera 20 includes a lens 22 and a video recording button 24 on the front thereof. The lens 22 causes a video light to be incident on the imaging unit described later. The video recording button 24 is used for manual operation. The video recording button 24 is pressed down by the user when video recording is started and is pressed down again when video recording is stopped. The appearance of the camera 20 is not limited to the example of Fig. 3.

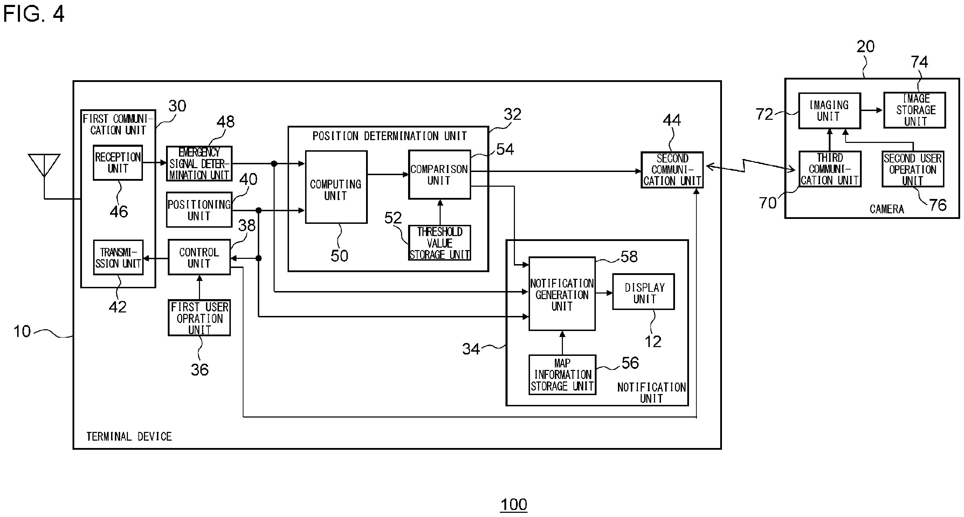

Fig. 4 is a block diagram showing a configuration of the camera system 100 of Fig. 1. The terminal device 10 includes a first communication unit 30, a position determination unit 32, a notification unit 34, a first user operation unit 36, a control unit 38, a positioning unit 40, a second communication unit 44, and an emergency signal determination unit 48. The first communication unit 30 includes a transmission unit 42 and a reception unit 46 and performs communication using a business wireless system. The position determination unit 32 includes a computing unit 50, a threshold value storage unit 52, and a comparison unit 54. The notification unit 34 includes a display unit 12, a map information storage unit 56, and a notification generation unit 58. For clarity of the description, illustration of the configuration related to calls is omitted. The camera 20 includes a third communication unit 70, an imaging unit 72, an image storage unit 74, and a second user operation unit 76. The first terminal device 10a through the fourth terminal device 10d shown in Fig. 1 share a common configuration, and the first camera 20a through the fourth camera 20d share a common configuration.

For clarity of the description, (1) the case where the terminal device 10 transmits an emergency signal and (2) the case where the terminal device 10 receives an emergency signal will be described in the order of processes.

### (1) The case where the terminal device 10 transmits an emergency signal

The terminal device 10 in the following description corresponds to the first terminal device 10a of Fig. 1, and the camera 20 corresponds to the first camera 20a. The first user operation unit 36 includes the emergency button 16 of Fig. 2. When the emergency button 16 is pressed down, the first user operation unit 36 outputs an instruction for emergency messaging to the control unit 38. The instruction for emergency messaging remains valid until the emergency button 16 is pressed down next.

The positioning unit 40 has a positioning function of a GPS (Global Positioning System) and measures the position of the host terminal device 10 and periodically acquires positional information resulting from the positioning. The positional information is identified by a latitude and a longitude. The positional information may include information on the altitude. The positioning unit 40 outputs the positional information to the control unit 38, the computing unit 50, and the notification generation unit 58.

In the case the first user operation unit 36 outputs an instruction for emergency messaging, the control unit 38 causes the transmission unit 42 to transmit an emergency signal, the positional information on the host terminal device 10, and the unique ID of the host terminal device 10, to the terminal devices 10 within the group, i.e., the second terminal device 10b through the fourth terminal device 10d of Fig. 1. The unique ID represents identification for identifying the terminal device 10 that has transmitted the emergency signal. These signals may be transmitted at the same frequency as used normally to make calls or may be transmitted at a different frequency.

When the output of the instruction for emergency messaging from the first user operation unit 36 is stopped, the control unit 38 causes the transmission unit 42 to stop transmitting the emergency signal, the positional information, and the unique ID. The emergency signal and the unique ID continue to be transmitted and the positional information is transmitted periodically since the emergency button 16 is pressed down until the emergency button 16 is pressed down again. The positional information may continue to be transmitted periodically regardless of the user operation of the emergency button 16.

Further, when an instruction for emergency messaging is output from the first user operation unit 36, the control unit 38 causes the camera 20 paired with the host terminal device 10 to start video recording. More specifically, the control unit 38 outputs a video recording start instruction to the second communication unit 44. The second communication unit 44 transmits the video recording start instruction to the third communication unit 70 of the camera 20. The second communication unit 44 and the third communication unit 70 perform near-field wireless communication exemplified by Bluetooth (registered trademark). The third communication unit 70 outputs a video recording instruction to the imaging unit 72. The imaging unit 72 captures a video in accordance with the video recording instruction and outputs imaged data to the image storage unit 74. The image storage unit 74 stores the imaged data. When the output of the instruction for emergency messaging from the first user operation unit 36 is stopped, the control unit 38 stops outputting the video recording instruction and causes the camera 20 paired with the host terminal device 10 to stop video recording.

### (2) The case where the terminal device 10 receives an emergency signal

The terminal device 10 in the following description corresponds to each of the second terminal device 10b through the fourth terminal device 10d of Fig. 1, and the camera 20 corresponds to each of the second camera 20b through the fourth camera 20d.

The reception unit 46 receives a reception signal from a further terminal device 10. The "further terminal device" in this case corresponds to the first terminal device 10a of Fig. 1 that has transmitted the emergency signal. The reception signal includes an emergency signal, positional information on the further terminal device 10, and the unique ID of the further terminal device 10. The reception unit 46 outputs the reception signal to the emergency signal determination unit 48.

The emergency signal determination unit 48 determines whether an emergency signal is received by referring to the reception signal. When an emergency signal is received, the emergency signal determination unit 48 outputs information indicating that the emergency signal is received and positional information on the further terminal device 10 included in the reception signal to the computing unit 50 and the notification generation unit 58. The emergency signal determination unit 48 outputs the unique ID of the further terminal device 10 included in the reception signal to the notification generation unit 58. When an emergency signal is not received, the emergency signal determination unit 48 does not output these items of information.

The positioning unit 40 measures the position of the host terminal device 10 and periodically acquires positional information resulting from the positioning. The positioning unit 40 outputs the positional information to the control unit 38, the computing unit 50, and the notification generation unit 58.

In the case the reception unit 46 receives an emergency signal, the computing unit 50 computes a distance d between the host terminal device 10 and the further terminal device 10 by referring to the positional information on the host terminal device 10 and the positional information on the further terminal device 10. The distance d is a direct distance and can be computed by using, for example, the Pythagorean theorem. In the case the Pythagorean theorem is used, the positional coordinates (a, b) are derived from the positional information on the further terminal device 10, the positional coordinates (c, d) are derived from the positional information on the host terminal device 10, and the distance is computed according to d=√((c-a)²+(d-b)²).

The threshold value storage unit 52 is comprised of a memory, etc. and stores a predetermined video recording start threshold value Th1 and a predetermined notification threshold value Th2. The notification threshold value Th2 is larger than the video recording start threshold value Th1. The video recording start threshold value Th1 and the notification threshold value Th2 are predefined by a computer simulation, an experiment, etc. In the example of Fig. 1, the distance d1 between the first terminal device 10a and the second terminal device 10b is smaller than the video recording start threshold value Th1. The distance d2 between the first terminal device 10a and the third terminal device 10c is larger than the video recording start threshold value Th1 and smaller than the notification threshold value Th2. The distance d3 between the first terminal device 10a and the fourth terminal device 10d is larger than the notification threshold value Th2.

Reference is made back to Fig. 4. The comparison unit 54 compares the distance d between the host terminal device 10 and the further terminal device 10 computed by the computing unit 50, the video recording start threshold value Th1, and the notification threshold value Th2. In the case the reception unit 46 receives an emergency signal and the distance d is equal to or smaller than the video recording start threshold value Th1, the comparison unit 54 causes the camera carried by the user along with the host terminal device 10, i.e., the camera 20 paired with the host terminal device 10, to start video recording. More specifically, the comparison unit 54 outputs a video recording instruction to the second communication unit 44. The second communication unit 44 transmits a video recording instruction to the third communication unit 70 of the camera 20. The third communication unit 70 outputs the video recording instruction to the imaging unit 72. The imaging unit 72 captures a video in accordance with the video recording instruction and outputs imaged data to the image storage unit 74. The image storage unit 74 stores the imaged data. The operation described above is performed in the second terminal device 10b and the second camera 20b of Fig. 1.

Further, in the case the reception unit 46 receives an emergency signal and the distance d is equal to or smaller than the notification threshold value Th2, the comparison unit 54 causes the notification unit 34 to provide the user with information related to the position of the further terminal device 10. More specifically, the comparison unit 54 outputs a position notification instruction to the notification unit 34. In accordance with the position notification instruction, the notification unit 34 notifies the user of the host terminal device 10 of information related to the position of the further terminal device 10, based on the positional information on the host terminal device 10 and the positional information on the further terminal device 10. The information related to the position of the further terminal device 10 includes the distance d, the direction in which the further terminal device 10 is located, the altitude difference from the further terminal device 10, and the route leading to the further terminal device 10. Such notification is processed in the second terminal device 10b and the third terminal device 10c of Fig. 1.

Further, when the reception unit 46 receives an emergency signal, the notification unit 34 notifies the user of the host terminal device 10 of information identifying the further terminal device 10 and of the reception of an emergency signal based on the unique ID received by the reception unit 46, regardless of the result of comparison in the comparison unit 54. Such notification is processed in the second terminal device 10b, the third terminal device 10c, and the fourth terminal device 10d of Fig. 1.

For example, notification of information by the notification unit 34 is performed as follows. The map information storage unit 56 stores map information. The notification generation unit 58 generates map data, based on the map information stored in the map information storage unit 56, the positional information on the host terminal device 10, and the positional information on the further terminal device 10. The map data includes the distance d, the direction in which the further terminal device 10 is located, the altitude difference from the further terminal device 10, and the route leading from the position of the host terminal device 10 to the position of the further terminal device 10. Further, the notification generation unit 58 generates information identifying the further terminal device 10 based on the unique ID and includes the generated information in the map data. The notification generation unit 58 outputs the generated map data to the display unit 12. The display unit 12 displays a map including various information, based on the map data.

Alternatively, the notification unit 34 may cause the display unit 12 to display the direction of the further terminal device 10 by using an arrow or characters instead of displaying a map and may cause the display unit 12 to display the distance d, the altitude difference, the information identifying the further terminal device 10, and the reception of an emergency signal by using characters. Still alternatively, the notification unit 34 may cause the speaker 14 to output these items of information in sound.

In the case the reception unit 46 does not receive an emergency signal, the notification unit 34 does not provide notification of the information identifying the further terminal device 10 and the reception of an emergency signal. In the case the reception unit 46 does not receive an emergency signal, the comparison unit 54 stops outputting the video recording instruction so as to cause the camera 20 not to perform video recording and stops outputting the position notification instruction so as to cause the notification unit 34 not to provide notification of information related to the position of the further terminal device 10.

When the distance d is larger than the video recording start threshold value Th1, the comparison unit 54 stops outputting the video recording instruction so as to cause the camera 20 not to perform video recording. When the distance d is larger than the notification threshold value Th2, the comparison unit 54 stops outputting the position notification instruction so as to cause the notification unit 34 not to provide notification of information related to the position of the further terminal device 10.

When the video recording button 24 of Fig. 3 included in the second user operation unit 76 of the camera 20 is pressed down by the user in the absence of transmission or reception of an emergency signal by the terminal device 10, the imaging unit 72 captures a video, and the image storage unit 74 stores imaged data. In other words, manual video recording can be performed.

The features are implemented in hardware such as a CPU, a memory, or other LSI's, of any computer and in software such as a program loaded into a memory. The figure depicts functional blocks implemented by the cooperation of these elements. Therefore, it will be understood by those skilled in the art that the functional blocks may be implemented in a variety of manners including hardware only, software only, or by a combination of hardware and software.

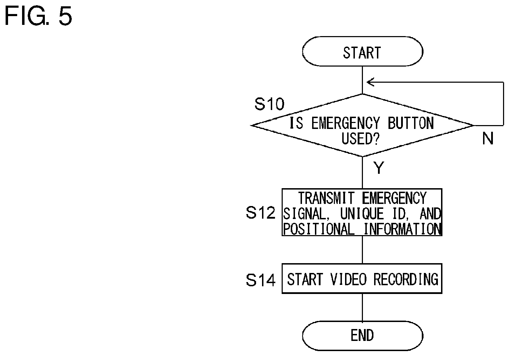

A description will be given of the operation of the communication system 200 having the configuration described above. Fig. 5 is a flowchart showing the process of transmitting an emergency signal in the terminal device 10 of Fig. 1. When the emergency button 16 is used (Y in S10), the transmission unit 42 transmits an emergency signal, a unique ID, and positional information (S12). The control unit 38 causes the camera 20 paired with the terminal device to start video recording (S14). The process is performed in the first terminal device 10a of Fig. 1. In the case the emergency button 16 is not used (N in S10), the terminal device 10 stands by.

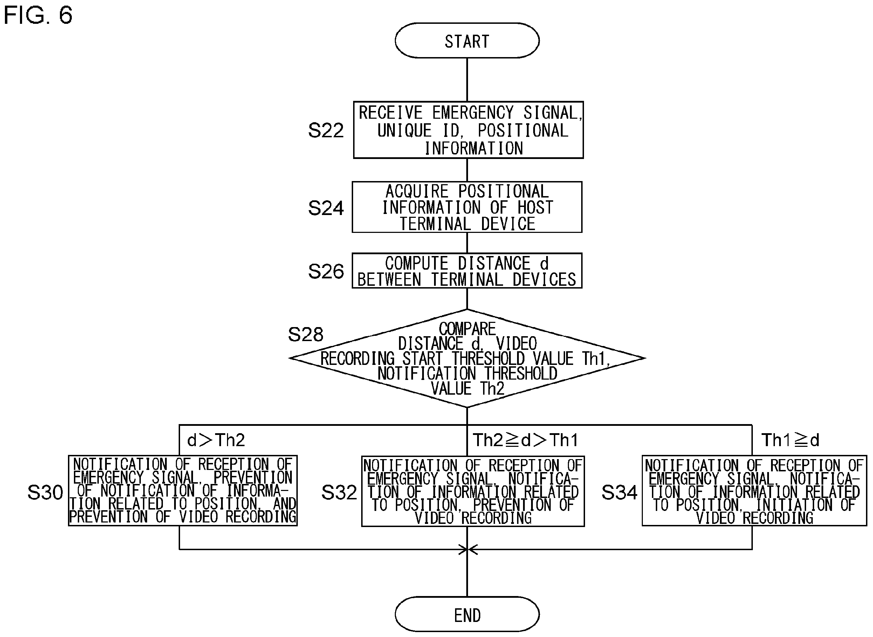

Fig. 6 is a flowchart showing the process of receiving an emergency signal in the terminal device 10 of Fig. 1. The process of Fig. 6 is performed in the terminal device 10 receiving an emergency signal, i.e., in each of the second terminal device 10b, the third terminal device 10c, and the fourth terminal device 10d of Fig. 1.

The reception unit 46 receives an emergency signal, the unique ID of the further terminal device 10 transmitting the emergency signal, and the positional information on the further terminal device 10 (S22). The positioning unit 40 acquires the positional information on the host terminal device 10 (S24). The computing unit 50 computes the distance d between the further terminal device 10 and the host terminal device 10 (S26). The comparison unit 54 compares the distance d, the video recording start threshold value Th1, and the notification threshold value Th2 (S28).

When the distance d is larger than the notification threshold value Th2, the notification unit 34 provides notification of the reception of an emergency signal and does not provide notification of information related to the position of the further terminal device, and the comparison unit 54 causes the camera 20 not to perform video recording (S30) . The process is performed in the fourth terminal device 10d of Fig. 1.

When the distance d is larger than the video recording start threshold value Th1 and equal to smaller than the notification threshold value Th2, the notification unit 34 provides notification of the reception of an emergency signal and provides notification of information related to the position of the further terminal device 10, and the comparison unit 54 causes the camera 20 not to perform video recording (S32). The process is performed in the third terminal device 10c of Fig. 1.

When the distance d is equal to smaller than the video recording start threshold value Th1, the notification unit 34 provides notification of the reception of an emergency signal and provides notification of information related to the position of the further terminal device 10, and the comparison unit 54 causes the camera 20 to start video recording (S34). The process is performed in the second terminal device 10b of Fig. 1.

Thus, according to the embodiment, the camera 20 is caused to start video recording when an emergency signal is received from the further terminal device 10 and the distance d between the host terminal device 10 and the further terminal device 10 is equal to or smaller than the video recording start threshold value Th1. Therefore, only the camera 20 approaching the target of imaging starts video recording. This prevents the camera 20, which does not capture a chased person within its imaging range, from performing unnecessary video recording.

Further, if video recording is started in the camera 20 of a user who is remote from the target of imaging and who is doing a different activity based on an instruction different from that of the user originating an emergency message and so unable go and help, the remote user's action may be interfered. The embodiment can prevent the camera 20 of such a user from starting video recording and so can prevent the user's action from being interrupted. Accordingly, the camera 20 can be caused to start video recording properly in an emergency.

Further, information on the position of the further terminal device 10 is communicated to the user of the host terminal device 10 when an emergency signal is received from the further terminal device 10 and the distance d between the host terminal device 10 and the further terminal device 10 is equal to or smaller than the notification threshold value Th2. Therefore, the direction in which the user should travel or the direction of the target of imaging can be indicated. Accordingly, the user is prompted to take a right action in response to the emergency message. Further, the embodiment ensures that the user who is remote from the target of imaging and who is doing a different activity based on a different instruction and so unable go and help is not notified of information related to the position of the further terminal device 10. Therefore, unnecessary notification is inhibited.

Further, the further terminal device 10 periodically transmits positional information on its own while the emergency signal is being transmitted. Therefore, the user of the host terminal device 10 can approach the user of the further terminal device 10 accurately even if both the user of the further terminal device 10 and the user of the host terminal device 10 are moving.

### (Second embodiment)

The second embodiment differs from the first embodiment in that the camera that starts video recording continues video recording until the camera receives a video recording stop instruction from the user. The following description highlights the difference from the first embodiment.

The configuration and function of the terminal device 10 and the configuration of the camera 20 are the same as those of the first embodiment, and the function of the camera 20 is different from that of the first embodiment. As described in the first embodiment, when the emergency button 16 of the first user operation unit 36 of the terminal device 10 transmitting an emergency signal is pressed down again while the emergency signal is being transmitted to stop outputting the instruction for emergency messaging from the first user operation unit 36, the control unit 38 causes the transmission unit 42 to stop transmitting the emergency signal and stops outputting the video recording instruction. Thus, the supply of the video recording instruction to the camera 20 is stopped in this case. Further, as described in the first embodiment, when the reception of the emergency signal is stopped and when the distance d between the host terminal device 10 and the further terminal device 10 is larger than the video recording start threshold value Th1, the comparison unit 54 of the terminal device 10 receiving the emergency signal stops outputting the video recording instruction. Therefore, the supply of the video recording instruction to the camera 20 is stopped in this case.

The camera 20 that has started video recording continues video recording until a video recording stop instruction is received from the user, regardless of the control by the terminal device 10. More specifically, when the imaging unit 72 starts capturing a video in response to the supply of a video recording instruction via the third communication unit 70, the imaging unit 72 continues video recording even when the supply of the video recording instruction via the third communication unit 70 is stopped. When the video recording button 24 included in the second user operation unit 76 is pressed down by the user while the imaging unit 72 is capturing a video, the second user operation unit 76 outputs a video recording stop instruction to the imaging unit 72. Upon receiving the video recording stop instruction, the imaging unit 72 stops capturing a video. This stops video recording.

Thus, according to this embodiment, the camera 20 that has started video recording continues video recording until a video recording stop instruction is received from the user. Therefore, failure to capture an important evidence is inhibited. For example, even when a third person such as a chased person intentionally presses down the emergency button of the terminal device 10 transmitting an emergency signal for a second time to terminate the transmission of the emergency signal, the camera 20 of the user originating the emergency signal and the user receiving the emergency signal, in which cameras video recording is in progress, does not stop video recording. Accordingly, failure to capture an important evidence is inhibited, and there is no need to resume video recording manually.

Further, even when the distance d from the user receiving the emergency signal and recording a video in the camera 20 grows while the user originating the emergency signal is continuing to chase the chased person until the distance d becomes larger than the video recording start threshold value Th1, the camera 20 of the user receiving the emergency signal and recording a video does not stop video recording. Accordingly, failure to capture an important evidence is inhibited. This is because the chased person could possibly be captured in a video even if the distance d grows larger than the video recording start threshold value Th1. Because video recording is not interrupted, the admissibility of evidence can be enhanced as compared with the case of interrupting video recording. Further, the advantage of the first embodiment is also available.

Described above is an explanation based on an exemplary embodiment. The embodiment is intended to be illustrative only and it will be understood by those skilled in the art that various modifications to constituting elements and processes could be developed and that such modifications are also within the scope of the present invention.

Instead of computing a direct distance, the computing unit 50 may, for example, compute the distance of a route from the host terminal device 10 to the further terminal device 10 based on the positional information on the host terminal device 10, the positional information on the further terminal device 10, and the map information in the map information storage unit 56. In this variation, the operation of the camera 20 can be controlled based on the distance of the route in which the user actually moves.

Alternatively, the computing unit 50 may compute the direct distance between the host terminal device 10 and the further terminal device based on the electrical field intensity of the emergency signal received from the further terminal device 10 instead of the positional information on the host terminal device 10 and the positional information on the further terminal device 10. According to this variation, the flexibility in the configuration is improved.

Further, described above is an example in which the terminal device 10 includes the positioning unit 40. Alternatively, the camera 20 may include a positioning unit, and the positioning unit may supply positional information to the terminal device 10. Further, described above is an example in which information related to the position of the further terminal device 10 is displayed on the display unit 12 of the terminal device 10. Alternatively, the camera 20 may include a display unit, and the notification unit 34 may cause the display unit of the camera 20 to display information related to the position of the further terminal device 10 so that the user is notified of the information via the display unit. According to this variation, the flexibility in the configuration is improved.

### [REFERENCE SIGNS LIST]

10 ... terminal device, 20 ... camera, 34 ... notification unit, 46 ... reception unit, 50 ... computing unit, 54 ... comparison unit, 60 ... acknowledgment unit, 100 ... camera system

### [INDUSTRIAL APPLICABILITY]

The present invention can be used in applications for controlling a camera.

## Claims

1. A terminal device (10) comprising:
a reception unit (46) that is configured to receive an emergency signal from a further terminal device;
a computing unit (50) that is configured to compute a distance between the terminal device (10) and the further terminal device;
a comparison unit (54) that is configured to cause a camera (20) connected to the terminal device (10) to start video recording when the reception unit (46) receives the emergency signal and the distance computed by the computing unit (50) is equal to or smaller than a predetermined video recording start threshold value (Th1); **characterized by**
a notification unit (34) configured to cause a display unit (12) of the terminal device (10) or of the camera (20) connected thereto to display information related to a position of the further terminal device,
wherein the comparison unit (54) is configured to cause the notification unit (34) to cause displaying information related to a position of the further terminal device when:
the distance computed by the computing unit (50) is equal to or smaller than a predetermined notification threshold value (Th2), which is greater than the video recording start threshold value (Th1).

2. The terminal device (10) according to claim 1, wherein the predetermined video recording start threshold value (Th1) indicates a distance corresponding to a distance within the imaging range of the camera (20).

3. The terminal device (10) according to claim 1 or 2, wherein the comparison unit (54) is further configured to cause the camera (20) to prevent video recording when:
the distance computed by the computing unit (50) is less than or equal to the predetermined notification threshold value (Th2), and
the distance computed by the computing unit (50) is greater than the predetermined video recording start threshold value(Th1).

4. The terminal device (10) according to any one of claims 1 through 3, wherein the comparison unit (54) further causes the notification unit (34) to display information related to the position of the further terminal device when the distance computed by the computing unit (50) is less than or equal to the predetermined video recording start threshold value (Th1).

5. The terminal device (10) according to any one of claims 1 through 4, wherein the comparison unit (54) further causes the camera (20) to prevent video recording and the notification unit (34) to prevent displaying information related to the position of the further terminal device when the distance computed by the computing unit (50) is greater than the predetermined notification threshold value (Th2).

6. A control method in a terminal device (10), comprising:
receiving an emergency signal from a further terminal device;
computing a distance between the terminal device (10) and the further terminal device; and
causing a camera (20) connected to the terminal device (10) to start video recording when the emergency signal is received and the computed distance is equal to or smaller than a predetermined video recording start threshold value (Th1);
**characterized by** providing notification of information related to a position of the further terminal device when:
the distance is equal to or smaller than a predetermined notification threshold value (Th2), which is greater than the predetermined video recording start threshold value (Th1),
wherein the providing notification includes displaying the information related to the position of the further terminal device.

## Patentansprüche

1. Eine Terminalvorrichtung (10) umfassend:
eine Empfangseinheit (46), die konfiguriert ist zum Empfangen eines Notsignals von einer weiteren Terminalvorrichtung;
eine Recheneinheit (50), die konfiguriert ist zum Berechnen einer Distanz zwischen der Terminalvorrichtung (10) und der weiteren Terminalvorrichtung;
eine Vergleichseinheit (54), die konfiguriert ist zum Veranlassen, dass eine Kamera (20), die mit der Terminalvorrichtung (10) verbunden ist, mit einer Videoaufzeichnung beginnt, wenn die Empfangseinheit (46) das Notsignal empfängt und die von der Recheneinheit (50) berechnete Distanz gleich oder kleiner ist als ein vorbestimmter Schwellenwert (Th1) für einen Beginn der Videoaufzeichnung; **gekennzeichnet durch**
eine Benachrichtigungseinheit (34), die konfiguriert ist zum Veranlassen, dass eine Anzeigeeinheit (12) der Terminalvorrichtung (10) oder der Kamera (20), die damit verbunden ist, Informationen anzeigt, die sich auf eine Position der weiteren Terminalvorrichtung beziehen,
wobei die Vergleichseinheit (54) konfiguriert ist, zum Veranlassen, dass die Benachrichtigungseinheit (34) veranlasst, dass Informationen angezeigt werden, die sich auf eine Position der weiteren Terminalvorrichtung beziehen, wenn:
die von der Recheneinheit (50) berechnete Distanz gleich oder kleiner ist als ein vorbestimmter Schwellenwert für die Benachrichtigung (Th2), der größer ist als der Schwellenwert für den Beginn der Videoaufzeichnung (Th1).

2. Terminalvorrichtung (10) nach Anspruch 1, wobei der vorbestimmte Schwellenwert (Th1) für den Beginn der Videoaufzeichnung eine Distanz anzeigt, die einer Distanz innerhalb des Abbildungsbereichs der Kamera (20) entspricht.

3. Terminalvorrichtung (10) nach Anspruch 1 oder 2, wobei die Vergleichseinheit (54) ferner konfiguriert ist zum Veranlassen, dass die Kamera (20) die Videoaufzeichnung verhindert, wenn:
die von der Recheneinheit (50) berechnete Distanz kleiner oder gleich dem vorbestimmten Schwellenwert für die Benachrichtigung (Th2) ist, und
die von der Recheneinheit (50) berechnete Distanz größer ist als der vorgegebene Schwellenwert für den Beginn der Videoaufzeichnung (Th1).

4. Terminalvorrichtung (10) nach irgendeinem der Ansprüche 1 bis 3, wobei die Vergleichseinheit (54) ferner die Benachrichtigungseinheit (34) dazu veranlasst, Informationen bezüglich der Position der weiteren Terminalvorrichtung anzuzeigen, wenn die von der Recheneinheit (50) berechnete Distanz kleiner als oder gleich dem vorbestimmten Schwellenwert (Th1) für den Beginn der Videoaufzeichnung ist.

5. Terminalvorrichtung (10) nach irgendeinem der Ansprüche 1 bis 4, wobei die Vergleichseinheit (54) ferner die Kamera (20) dazu veranlasst, die Videoaufzeichnung zu verhindern, und die Benachrichtigungseinheit (34) dazu veranlasst, die Anzeige von Informationen bezüglich der Position der weiteren Terminalvorrichtung zu verhindern, wenn die von der Recheneinheit (50) berechnete Distanz größer ist als der vorbestimmte Schwellenwert für die Benachrichtigung (Th2).

6. Ein Steuerungsverfahren in einer Terminalvorrichtung (10), umfassend:
Empfangen eines Notsignals von einer weiteren Terminalvorrichtung;
Berechnen einer Distanz zwischen der Terminalvorrichtung (10) und der weiteren Terminalvorrichtung; und
Veranlassen, dass eine Kamera (20), die mit der Terminalvorrichtung (10) verbunden ist, mit einer Videoaufzeichnung beginnt, wenn das Notsignal empfangen wird und die berechnete Distanz gleich oder kleiner ist als ein vorbestimmter Schwellenwert (Th1) für einen Beginn der Videoaufzeichnung; **gekennzeichnet durch**
Bereitstellen einer Benachrichtigung über Informationen bezüglich einer Position der weiteren Terminalvorrichtung, wenn:
die Distanz gleich oder kleiner ist als ein vorbestimmter Schwellenwert für die Benachrichtigung (Th2), der größer ist als der vorbestimmte Schwellenwert für den Beginn der Videoaufzeichnung (Th1),
wobei das Bereitstellen der Benachrichtigung ein Anzeigen der Information mit Bezug zu der Position der weiteren Terminalvorrichtung umfasst.

## Revendications

1. Dispositif terminal (10) comprenant :
une unité de réception (46) qui est configurée pour recevoir un signal d'urgence provenant d'un autre dispositif terminal ;
une unité de calcul (50) qui est configurée pour calculer une distance entre le dispositif terminal (10) et l'autre dispositif terminal ;
une unité de comparaison (54) qui est configurée pour faire qu'une caméra (20) connectée au dispositif terminal (10) commence un enregistrement vidéo lorsque l'unité de réception (46) reçoit le signal d'urgence et que la distance calculée par l'unité de calcul (50) est égale ou inférieure à une valeur seuil de début d'enregistrement vidéo prédéterminée (Th1) ; **caractérisé par**
une unité de notification (34) configurée pour faire qu'une unité d'affichage (12) du dispositif terminal (10) ou de la caméra (20) connectée à celui-ci affiche des informations relatives à une position de l'autre dispositif terminal,
dans lequel l'unité de comparaison (54) est configurée pour faire que l'unité de notification (34) fasse afficher des informations relatives à une position de l'autre dispositif terminal lorsque :
la distance calculée par l'unité de calcul (50) est égale ou inférieure à une valeur seuil de notification prédéterminée (Th2), qui est supérieure à la valeur seuil de début d'enregistrement vidéo (Th1).

2. Dispositif terminal (10) selon la revendication 1, dans lequel la valeur seuil de début d'enregistrement vidéo prédéterminée (Th1) indique une distance correspondant à une distance dans la plage d'imagerie de la caméra (20).

3. Dispositif terminal (10) selon la revendication 1 ou 2, dans lequel l'unité de comparaison (54) est en outre configurée pour faire que la caméra (20) empêche l'enregistrement vidéo lorsque :
la distance calculée par l'unité de calcul (50) est inférieure ou égale à la valeur seuil de notification prédéterminée (Th2), et que
la distance calculée par l'unité de calcul (50) est supérieure à la valeur seuil de début d'enregistrement vidéo prédéterminée (Th1).

4. Dispositif terminal (10) selon l'une quelconque des revendications 1 à 3, dans lequel l'unité de comparaison (54) fait en outre que l'unité de notification (34) affiche des informations relatives à la position de l'autre dispositif terminal lorsque la distance calculée par l'unité de calcul (50) est inférieure ou égale à la valeur seuil de début d'enregistrement vidéo prédéterminée (Th1).

5. Dispositif terminal (10) selon l'une quelconque des revendications 1 à 4, dans lequel l'unité de comparaison (54) fait en outre que la caméra (20) empêche l'enregistrement vidéo et que l'unité de notification (34) empêche l'affichage d'informations relatives à la position de l'autre dispositif terminal lorsque la distance calculée par l'unité de calcul (50) est supérieure à la valeur seuil de notification prédéterminée (Th2).

6. Procédé de commande dans un dispositif terminal (10), comprenant :
recevoir un signal d'urgence d'un autre dispositif terminal ;
calculer une distance entre le dispositif terminal (10) et l'autre dispositif terminal ; et
faire qu'une caméra (20) connectée au dispositif terminal (10) commence un enregistrement vidéo lorsque le signal d'urgence est reçu et que la distance calculée est égale ou inférieure à une valeur seuil de début d'enregistrement vidéo prédéterminée (Th1) ; **caractérisé par**
fournir une notification d'informations relatives à une position de l'autre dispositif terminal lorsque :
la distance est égale ou inférieure à une valeur seuil de notification prédéterminée (Th2), qui est supérieure à la valeur seuil de début d'enregistrement vidéo prédéterminée (Th1) ,
dans lequel fournir une notification comprend afficher les informations relatives à la position de l'autre dispositif terminal.
